# EUROPEAN PATENT APPLICATION

(11) **EP 1 892 708 A2**
(43) Date of publication of application: **27.02.2008**
(21) Application number: 07014525.5
(22) Date of filing: 24.07.2007
(51) Int. Cl.: G11B 7/257, G11B 7/24

(54) **Single-sided double layer disc with improved protective layer and manufacturing method of the same**

(30) Priority: 25.08.2006 CN 200610121461
(71) Applicant: Princo Corp., Hsinchu (TW)
(72) Inventor: Lin, Chih-Feng, Hsinchu (TW)
(74) Representative: TER MEER - STEINMEISTER & PARTNER GbR

(57) **Abstract**

A single-sided double layer disc comprises a first access layer, a second access layer, a bonding layer, and a protective layer. The first and second access layers are used for allowing a driving device to access the disc. The second access layer includes a second substrate having a second coating surface, a reflective layer laminated on the second coating surface, and a second recording layer laminated on the reflective layer. The protective layer, made of metal or semiconductor material, is formed on the second recording layer. The bonding layer is formed between the first access layer and the protective layer for bonding the first access layer and the second access layer such that the second recording layer faces the first access layer.

## Description

### BACKGROUND OF THE INVENTION

### a) Field of the Invention

The invention relates to a single-sided double layer disc and a manufacturing method thereof and, more particularly, to a single-sided double layer disc with improved protective layer and a manufacturing method thereof.

### b) Description of the Related Art

An optical disc can store data in different formats, such as image, computer digital image, and text. Therefore, optical discs are the most convenient storage media among the optical storage media of new generation, and can be applied in many fields, including library archives, data backup, electronic publication, image data storage, and personal medical record management.

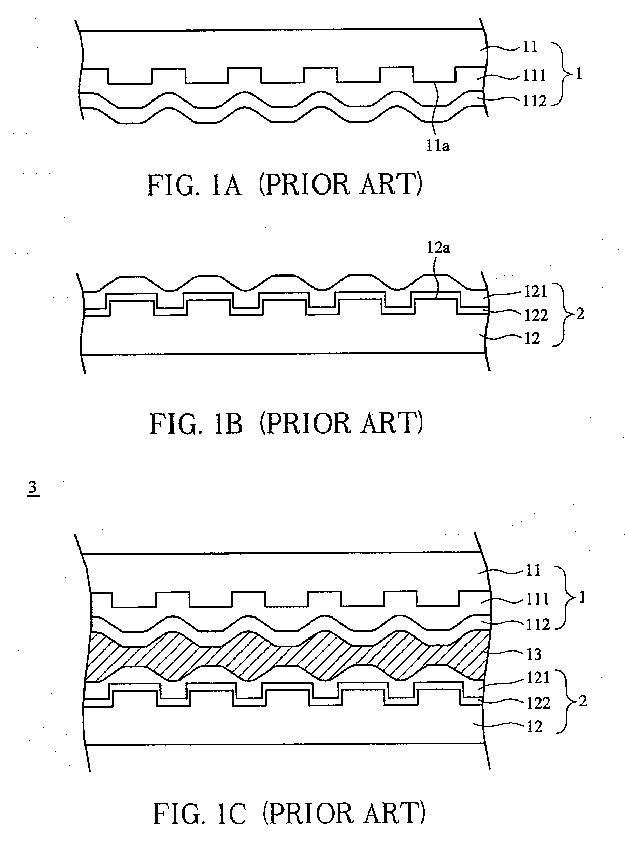

A conventional way to effectively increase the storage space of an optical disc is to add an extra recording layer, making the optical disc double-layered. Referring to FIGS. 1 A to 1C, a write-once optical disc is used to illustrate a conventional method of fabricating single-sided double layer discs. First, as shown in FIG. 1A, a first recording layer 111 is formed on a first coating surface 11 a of a first substrate 11, and a semi-reflective layer 112 is formed on the first recording layer 111; thus a first access layer 1 is formed. Next, as shown in FIG. 1B, a reflective layer 122 is formed on a second coating surface 12a of a second substrate 12, and then a second recording layer 121 is formed on the reflective layer 122; thus a second access layer 2 is formed. Last, the semi-reflective layer 112 of the first access layer 1 and the second recording layer 121 of the second access layer 2 are arranged to face each other and then are bonded with a bonding layer 13, and hence a single-sided double layer disc 3 as shown in FIG. 1C is obtained.

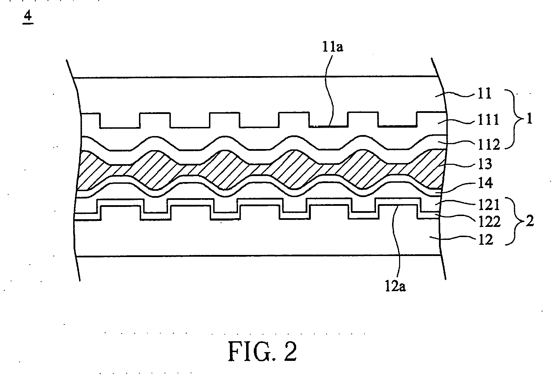

The material of the bonding layer 13 is usually an ultraviolet curing agent, and when in contact with the dyes of the second recording layer, physical and chemical reactions would occur, which in turn affects the accuracy of data recording and the durability of the disc. To ensure that the disc not be affected thereby, a protective layer 14 is added between the bonding layer 13 and the second recording layer 121 to prevent physical or chemical reactions from occurring between the bonding layer 13 and the second recording layer 121, resulting in a single-sided double layer disc 4 as shown in FIG. 2. The material of the protective layer 14 must have high visual opacity and be inactive with the bonding layer 13 and the recording layer 121. Most conventional materials for the protective layer 14 are dielectric materials, like zinc sulfide or silicon nitride, and the thickness of the protective layer is usually between 100 and 150nm, so that reaction between the bonding layer 13 and the second recording layer 121 can be effectively prevented.

Although the dielectric material, which is used to form the protective layer 14, has better visual opacity, there are many disadvantages. For example, most dielectric materials are ceramic materials with dense molecule structures, which means that the purchasing cost thereof is relatively high and the coating process cannot be carried out by DC sputtering, but by RF sputtering. Therefore, a more expensive RF power supply must be used during the coating process and the production parameters are hard to control.
Moreover, due to physical limitations of the dielectric material, it takes a longer time to form a protective layer with a thickness of 100 to 150 nm by RF sputtering. If an optical disc stays too long in a vacuum sputtering chamber, it would warp and deform due to the high-temperature in the chamber and the internal stress of the dielectric material layer, which in turn lowers the yield of the optical disc or the durability of the disc.

Hence, a single-sided double layer optical disc with improved protective layer that can be easily produced with lower production cost is much needed.

### SUMMARY OF THE INVENTION

In view of the aforementioned problems, an object of the invention is to provide a single-sided double layer disc with improved protective layer and a manufacturing method thereof, whereby the disc can be produced easily and with lower production cost and the yield is increased.

A single-sided double layer disc according to an embodiment of the invention comprises a first access layer, a second access layer, a bonding layer, and a protective layer. The first access layer and the second access layer are used to allow a driving device to access the disc. The second access layer includes: a second substrate having a second coating surface; a reflective layer laminated on the second coating surface; and a second recording layer laminated on the reflective layer. The protective layer is formed on the second recording layer and is made of metal or semiconductor material. The bonding layer is formed between the first access layer and the protective layer, and is used to bond the first access layer and the second access layer together, wherein the second recording layer faces the first access layer.

The invention also discloses a manufacturing method of the aforementioned single-sided double layer disc. First, a first access layer and a second access layer are prepared, wherein the preparation of the second access layer includes: providing a second substrate having a second coating surface; forming a reflective layer on the second coating surface; and forming a second recording layer on the reflective layer. Second, a protective layer is formed on the second recording layer, and the protective layer is made of metal or semiconductor material. Last, the first access layer and the second access layer are bonded together by a bonding layer, wherein the second recording layer faces the first access layer.

Since the material of the improved protective layer according to an embodiment of the invention can be coated by DC sputtering, the production parameters are easy to control, and therefore the production cost is lowered. Moreover, due to the characteristic of the materials, the relatively-thinner protective layer can effectively prevent reaction between the bonding layer and the second recording layer, and thus the time it takes to sputter the protective layer is shorter, which in turn minimizes the warping and deforming of the disc caused by high-temperature in a sputtering chamber. Hence, the yield is effectively increased.

### BRIEF DESCRIPTION OF THE DRAWINGS

FIG. 1A is a partial sectional schematic view of a first access layer of a single-sided double layer disc.

FIG. 1B is a partial sectional schematic view of a second access layer of a single-sided double layer disc.

FIG. 1C is a partial sectional schematic view of a single-sided double layer disc without protective layer.

FIG. 2 is a partial sectional schematic view of a single-sided double layer disc with improved protective layer according to an embodiment of the invention.

### DETAILED DESCRIPTION OF THE INVENTION

The preferred embodiments of a single-sided double layer disc with improved protective layer and a manufacturing method of the same according to the invention will be described in detail with reference to the drawings, in which like reference numerals denote like elements.

A write-once, single-sided double layer disc, like DVD-R dual, is used as an illustration in the following description. Referring to FIG. 2, a single-sided double layer disc 4 with improved protective layer according to an embodiment of the invention includes: a first access layer 1, a second access layer 2, a bonding layer 13, and a protective layer 14, wherein the first access layer 1 and the second access layer 2 are used for allowing a driving device to access the disc 4. For this illustration, the first access layer 1 includes: a first substrate 11, which has a first coating surface 11a; a first recording layer 111 laminated on the first coating surface 11a; and a semi-reflective layer 112 laminated on the first recording layer 111. The second access layer 2 includes: a second substrate 12, which has a second coating surface 12a; a reflective layer 122 laminated on the second coating surface 12a; and a second recording layer 121 laminated on the reflective layer 122. The semi-reflective layer 112 and the reflective layer 122 can be made of metal materials; the first recording layer 111 and the second recording layer 121 can be made of dyes.

The boding layer 13 is used for bonding the first access layer 1 and the second access layer 2, and the two access layers are bonded with the second recording layer 121 of the second access layer 2 facing the first access layer 1. The bonding layer 13 is between the semi-reflective layer 112 and the protective layer 14. The protective layer 14 is laminated between the second recording layer 121 and the bonding layer 13; the material of the protective layer 14 can be metal or semiconductor material. For example, the material of the protective layer 14 can be a noble metal such as gold, silver, platinum, palladium, rhodium, or iridium, or a semiconductor material like silicon, gallium, indium, or germanium; it can also be titanium or titanium alloy like silver-titanium or aluminum-titanium, molybdenum, or tantalum. Since the aforementioned materials for the protective layer are dense, a relatively-thinner protective layer 14 can prevent reaction between the bonding layer 13 and the second recording layer 121; for example, the thickness of the protective layer 14 can be less than 20nm, preferably less than 10nm, and more preferably less than 5nm.

A manufacturing method of the aforementioned single-sided double layer disc according to an embodiment of the invention is herein described. First, a first access layer 1 and a second access layer 2 are prepared. For example, the preparation of the first access layer 1 includes steps of: providing a first substrate 11; forming a first recording layer 111 on a first coating surface 11 a; and forming a semi-reflective layer 112 on the first recording layer 111. The steps for preparing the second access layer 2 include: providing a second substrate 12 having a second coating surface 12a; forming a reflective layer 122 on the second coating surface 12a; and forming a second recording layer 121 on the reflective layer 122.

Next, a protective layer 14 is formed on the second recording layer 121 and the material of the protective layer 14 is as stated in the above and will not be described herein. It is to be noted that the protective layer 14 can be formed by DC sputtering or RF sputtering, preferably by DC sputtering. Last, the first access layer 1 and the second access layer 2 are bonded together by a bonding layer between the first access layer 1 and the protective layer 14, and in particular, the bonding layer is between the semi-reflective layer 112 and the protective layer 14, wherein the second recording surface 121 is arranged to face the first access layer 1 when the two access layers are bonded.

With the single-sided double layer disc having an improved protective layer and the manufacturing method thereof according to the invention, the production cost is lowered because the material of the improved protective layer can be coated by DC sputtering, for which the production parameters are easy to control, and the price of the aforementioned materials for the protective layer is cheaper than the price of conventional dielectric materials. Moreover, due to the characteristic of the materials, a relatively-thinner protective layer can effectively prevent reaction between the bonding layer and the second recording layer, and therefore, in the fabrication process, the time that the disc stays in the sputtering chamber is shorter, which in turn minimizes the warping and deforming of the disc caused by the high-temperature in the sputtering chamber. And thus, the yield of disc is effectively increased.

While the invention has been described by way of example and in terms of the preferred embodiment, it is to be understood that the invention is not limited to the disclosed embodiments. In other words, it is intended to include equivalent modifications and changes of the above embodiments without departing from the spirit and scope of the invention as would be apparent to those skilled in the art. For example, although DVD-R dual is used as an illustration in the above description, the invention can also be implemented to other single-sided double layer discs, e.g. HD DVD-dual, or to a multi-layer disc. Therefore, the scope of the appended claims should be accorded the broadest interpretation so as to encompass all such equivalent modifications and changes.

## Claims

1. A single-sided double layer disc comprising:
a first access layer for allowing a driving device to access the disc;
a second access layer for allowing the driving device to access the disc, comprising:
a second substrate having a second coating surface;
a reflective layer laminated on the second coating surface; and
a second recording layer laminated on the reflective layer;
a protective layer laminated on the second recording layer, the protective layer being made of metal or semiconductor material; and
a bonding layer between the first access layer and the protective layer.

2. The single-sided double layer disc as described in claim 1, wherein the thickness of the protective layer is less than 20nm.

3. The single-sided double layer disc as described in claim 1, wherein the protective layer is made of a noble metal.

4. The single-sided double layer disc as described in claim 3, wherein the noble metal is gold, silver, platinum, palladium, rhodium, or iridium.

5. The single-sided double layer disc as described in claim 1, wherein the semiconductor material is silicon, gallium, indium, or germanium.

6. The single-sided double layer disc as described in claim 1, wherein the protective layer is made of titanium or titanium alloy.

7. The single-sided double layer disc as described in claim 6, wherein the titanium alloy is aluminum-titanium or silver-titanium.

8. The single-sided double layer disc as described in claim 1, wherein the protective layer is made of molybdenum or tantalum.

9. The single-sided double layer disc as described in claim 1, wherein the first access layer comprises:
a first substrate having a first coating surface;
a first recording layer laminated on the first coating surface; and
a semi-reflective layer laminated on the first recording layer;
wherein the bonding layer is between the semi-reflective layer and the protective layer.

10. A method for manufacturing a single-sided double layer disc, comprising:
preparing a first access layer;
preparing a second access layer, comprising the steps of:
providing a second substrate having a second coating surface;
forming a reflective layer on the second coating surface; and
forming a second recording layer on the reflective layer;
forming a protective layer on the second recording layer, the protective layer being made of metal or semiconductor material; and
bonding the first access layer and the protective layer together with a bonding layer.

11. The method as described in claim 10, wherein the thickness of the protective layer is less than 20nm.

12. The method as described in claim 10, wherein the protective layer is formed by DC sputtering or RF sputtering.

13. The method as described in claim 10, wherein the protective layer is made of a noble metal.

14. The method as described in claim 13, wherein the noble metal is gold, silver, platinum, palladium, rhodium, or iridium.

15. The method as described in claim 10, wherein the semiconductor material is silicon, gallium, indium, or germanium.

16. The method as described in claim 10, wherein the protective layer is made of titanium or titanium alloy.

17. The method as described in claim 16, wherein the titanium alloy is aluminum-titanium or silver-titanium.

18. The method as described in claim 10, wherein the protective layer is made of molybdenum or tantalum.

19. The method as described in claim 10, wherein the step of preparing the first access layer comprises:
providing a first substrate having a first coating surface;
forming a first recording layer on the first coating surface; and
forming a semi-reflective layer on the first recording layer;
wherein the bonding layer is between the semi-reflective layer and the protective layer.
